Europäisches Patentamt

European Patent Office

Office européen des brevets

(11) Veröffentlichungsnummer: **0 334 098**
**A1**

## (12) EUROPÄISCHE PATENTANMELDUNG

(21) Anmeldenummer: 89103986.9

(22) Anmeldetag: 07.03.89

(51) Int. Cl.⁴: **H01M 2/02 , H01M 2/12 , H01M 6/14 , A62B 9/00**

(30) Priorität: 21.03.88 DE 3809406

(43) Veröffentlichungstag der Anmeldung:
27.09.89 Patentblatt 89/39

(84) Benannte Vertragsstaaten:
AT BE CH DE ES FR GB GR IT LI LU NL SE

(71) Anmelder: GESELLSCHAFT FÜR GERÄTEBAU MBH
Hannöversche Strasse 72
D-4600 Dortmund 1(DE)

(72) Erfinder: Hübner, Hans-Jörg
Pfarrer-Kneipp-Strasse 9
D-4600 Dortmund 1(DE)
Erfinder: Rische, Heribert
Speyerstrasse 5
D-4600 Dortmund 1(DE)

(74) Vertreter: Kaewert, Klaus Kaewert und Dr. Mulert Rechtsanwälte
Huyssenallee 85
D-4300 Essen 1(DE)

(54) Batteriepack.

(57) Nach der Erfindung sind Lithiumbatterien (4) für ein Belüftungsgerät (2) einsetzbar, welches im Zusammenhang mit Atemschutzmasken bzw. Schutzanzügen Verwendung findet, indem die Lithiumbatterien (4) eingekapselt sind und die Einkapselung eine Sollrißstelle zum Freisetzen drückender Gase besitzt und indem das die Lithiumbatterien (4) umgebende Gehäuse (1) einen Verschluß aufweist, der sich bei Freiwerden der drückenden Gase öffnet, um die Gase nach außen zu entspannen.

FIG.1

EP 0 334 098 A1

**Batteriepack**

Die Erfindung betrifft einen Batteriepack für ein Belüftungsgerät, insbesondere für Atemschutzmaske und/oder Schutzanzug, wobei das Belüftungsgerät den zur Überwindung des Strömungswiderstandes notwendigen Druck und/oder einen Überdruck erzeugt.

Atemschutzmasken sind vor allem als BC-Schutzmasken bekannt. Diese Masken haben die Aufgabe, aus kontaminierter Umgebungsluft unschädliche Atemluft herzustellen. Zu diesem Zweck sind im Atemweg der Schutzmaske Filter vorgesehen. Die gebräuchlichen Filter sind Aktivkohlefilter. Zur Überwindung des Strömungswiderstandes derartiger Filter hat der Benutzer so viel Energie aufzubringen, daß ein Gebrauch der Atemschutzmasken sehr anstrengend ist. Zur Überwindung dieses Strömungswiderstandes ist die Verwendung von Belüftungsgeräten bekannt. Solche Belüftungsgeräte besitzen ein Gebläse, welches vorzugsweise hinter dem Filter angeordnet ist, also als Saugzuggebläse wirkt und die Atemluft durch den Filter zieht. Wahlweise kann der Saugzug so eingestellt werden, daß sich in der Atemschutzmaske ein Überdruck gegenüber der umgebenden Atmosphäre entwickelt. Das kann verschiedene Vorteile haben.

Zum Betrieb des Belüftungsgerätes sind nach dem Vorschlag der DE-OS 35 23 097 Batterien vorgesehen. Dabei ist für die Beurteilung einer Batterie deren Leistungsgewicht ein besonderes Kriterium. Als Leistungsgewicht ist die Stromerzeugung unter Berücksichtigung des Batteriegewichtes anzusehen. Der Erfindung liegt die Aufgabe zugrunde, besonders leistungsstarke Batterien für ein Belüftungsgerät einzusetzen. Dabei geht die Erfindung von Lithiumbatterien oder dergleichen Batterien aus. Lithiumbatterien sind bislang in Belüftungsgeräten für Atemschutzmasken noch nicht eingesetzt worden. Vor dem Einsatz von Lithiumbatterien sind erhebliche Probleme zu überwinden. Zu diesen Problemen gehört der Betriebsdruck solcher Batterien. Der Betriebsdruck kann leicht 5 oder 6 Bar betragen. Der Betriebsdruck kann jedoch extrem ansteigen. Das ist bei Kurzschluß der Fall. Er kann jedoch auch andere Materialfehler oder Betriebsfehler als Ursache haben. In einem solchen Fall besteht eine Explosionsgefahr. Die Explosionsgefahr ist um so größer, als die Lithiumbatterien zur Beherrschung des normalen Betriebsdruckes mit einem Metallmantel versehen sein müssen.

Aus obigem Grund sind Lithiumbatterien bislang für Belüftungsgeräte nicht zum Einsatz gekommen, obwohl aus dem deutschen Gebrauchsmuster G84 36 184 Gehäuse für Energieversorgungseinheiten, die Batterien besitzen, bekannt sind, wobei dieses Gehäuse als Sicherungselement gegen einen möglichen Überdruck im Innenraum des Gehäuses mit einem Verschluß durch eine Berstscheibe und eine Belüftungsbohrung versehen ist.

Auch die US Patentschrift 44 84 691 hat nicht den Einsatz von Lithiumbatterien in Belüftungsgeräten veranlaßt. In der US Patentschrift ist vorgeschlagen, Lithiumbatterien mit einem Metallmantel zu versehen, der eine Sollrißstelle aufweist.

Die Erfindung geht davon aus, daß Lithiumbatterien grundsätzlich mit einer Sollbruchstelle versehen werden. In der Sammelanordnung in einem Batteriepack ist die Entladungsrichtung undefiniert. Das Batteriepackgehäuse muß die Entladung in eine ungefährliche Richtung kanalisieren. Dabei ist eine Berstscheibe häufig ungeeignet, weil die Berstscheibe für geringe Entladungsdrücke so dünn ausgelegt werden muß, daß bereits im rauhen Betrieb mit dem Belüftungsgerät eine Zerstörung ohne Entladung unvermeidbar ist. Mit dem erfindungsgemäße Stopfen läßt sich der Öffnungsdruck auch viel genauer einstellen, z. B. auf einen Druck zwischen 1 und 5 kg.

Außerdem bewirkt die erfindungsgemäße Anordnung des Stopfens am Boden des Batteriepacks, daß die austretenden Gase nicht gegen den Träger des Belüftungsgerätes gerichtet sind.

Ein weiterer Vorteil des Stopfens ist die kontrollierte Möglichkeit und Zugänglichkeit nach Verbrauch der Batterie. Dann kann der Stopfen gelöst werden, um bei Lagerung der verbrauchten Batterie bis zur abschließenden Entsorgung eine Explosionsgefahr zu verhindern.

Der Verschluß wahlweise durch eine kreisförmige Öffnung im Boden des Gehäuses gebildet, die durch einen Stopfen ver schlossen ist. Der Stopfen sitzt z. B. mit Preßpassung in der Öffnung. Der Öffnungsdruck wird über die Preßpassung eingestellt. Eine solche Pressung kann auch mit Hilfe eines Dichtringes erzeugt werden, der am Stopfen oder am Behälterboden angeordnet ist und die gewünschte Anpreßkraft erzeugt.

Es ist vorteilhaft, wenn der Stopfen lösbar ist. Damit kann das Batteriegehäuse gelüftet werden. Zum Öffnen des Verschlusses ist der Stopfen z.B. mit einem Rand versehen und in dem Gehäuseboden eine Ausnehmung vorgesehen, durch die der Stopfenrand mit einem geeigneten Werkzeug, z.B. Schraubenzieher, unterfaßt und der Stopfen herausgehebelt werden kann.

Vorzugsweise befindet sich unter dem Stopfen auch ein Schalter eines Stromkreises, mit dem die Batterien vollständig entleert werden können. Nur bei vollständiger Entleerung ist sichergestellt, daß Lithiumbatterien nicht eine unerwünschte Erwärmung aus obigen Gründen erfahren. D.h., nach Gebrauch von Lithiumbatterien ist nach der Erfindung eine Restentladung vorgesehen.

In dem Stromkreis für die Restentladung ist ein Widerstand vorgesehen. Der Widerstand verhindert eine Kurzschlußsituation. Außerdem ist ein weiterer Schalter vorgesehen, der sich bei übermäßiger Erwärmung öffnet und damit die Restentladung unterbricht. Vorzugsweise findet ein reversibler Schalter Anwendung, der z. B. nach dem System eines Bimetalls arbeitet. Diese Schalter sind unter der Bezeichnung Poly-Switch bekannt.

In der Zeichnung ist ein Ausführungsbeispiel der Erfindung dargestellt.

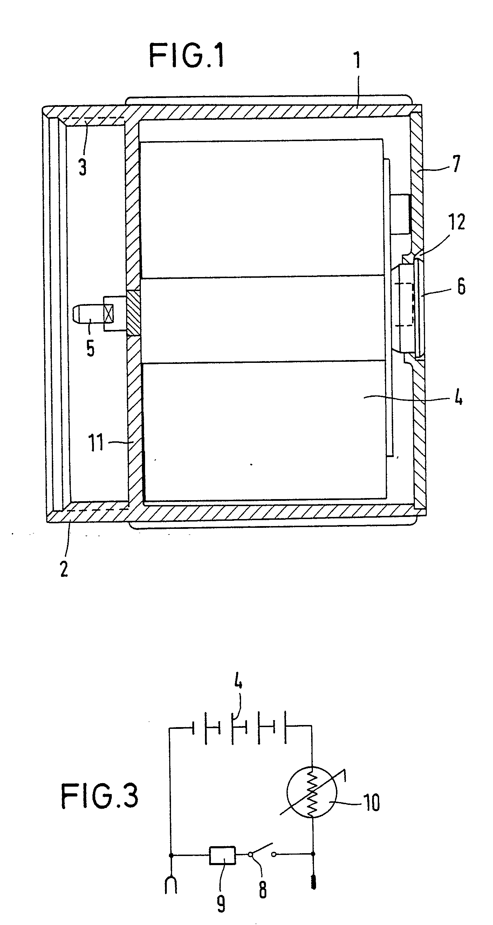

Figur 1 zeigt den Batteriepack für ein Belüftungsgerät. Der Batteriepack besitzt ein Gehäuse 1, dessen Anschluß an das übrige Gehäuse des Belüftungsgerätes mit 2 bezeichnet ist. Im Ausführungsbeispiel ist dabei ein Gewinde 3 vorgesehen. Anstelle des Gewindes 3 kann auch ein Bajonettverschluß oder ein anderer Schnellverschluß vorgesehen sein. Im wesentlichen arbeiten diese Verschlüsse auf Basis von Zapfen und Nut, wobei die Nut den Zapfen erfaßt und durch Drehen des Gehäuses 1 gegenüber dem übrigen Gerätegehäuse eine Verspannung beider Gehäuse erreicht wird.

Zu dem Belüftungsgerät gehört im übrigen ein mit Elektromotor betriebener Lüfter. Vorteilhaft ist die Verwendung eines Lamellenrades anstelle eines Flügelrades. Der Lüfter ist im Ausführungsbeispiel hinter einem nicht dargestellten Filter angeordnet, so daß Umgebungsluft durch den Filter angesaugt wird. Die gereinigte Umgebungsluft wird als Atemluft über eine flexible Schlauchleitung einer Atemschutzmaske zugeführt. Je nach Steuerung des Lüfters überwindet der Lüfter gerade den Strömungswiderstand der Luft im Filter. Der Lüfter kann jedoch auch verstärkt in Gang gesetzt werden, so daß ein Überdruck in der Atemschutzmaske entsteht.

Wahlweise ist die Atemschutzmaske Teil eines gesamten Schutzanzuges oder aber das Belüftungsgerät als Klimatisierungsgerät and den Schutzanzug angeschlossen.

Der Batteriepack nach Figure 1 besitzt fünf Lithiumbatterien 4 mit einer Leistung 7 bis 10 Amperestunden (Ah) bei 2,8 bis 3 Volt (V). Die Lithium batterien sind in Reihe geschaltet und können über einen Stecker 5 an das Belüftungsgerät angeschlossen werden. Dementsprechend ist im korrespondierenden Ende des Belüftungsgerätegehäuses eine Buchse für den Stecker 5 vorgesehen.

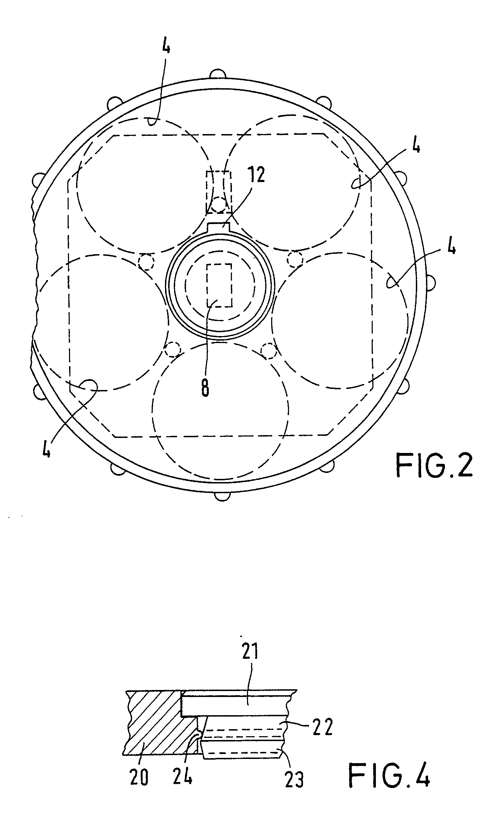

Alle Lithiumbatterien 4 sind mit einem Stahlmantel versehen. Jeder Stahlmantel besitzt eine Sollrißstelle, die bei einem unzulässig hohen Druckaufbau öffnet und die den Druck verursachenden Gase entweichen läßt. Die Gase strömen dann gegen einen Stopfen 6 im Fuß 7 des Gehäuses 1. Der Stopfen 6 hat in der Ansicht nach Figure 2 eine Kreisform und sitzt mit Preßpassung im Fuß 7. Die Preßpassung ist so ausgelegt, daß der Stopfen sich bei gängigen Erschütterungen des Belüftungsgerätes - auch beim Herabfallen des Belüftungsgerätes - nicht von allein löst, jedoch dem Druck der anströmenden Gase sofort nachgibt. Dann können die Gase ausströmen. eine Explosionsgefahr besteht nicht.

In einem weiteren Ausführungsbeispiel nach Figur 4 ist der Stopfen 21 mit einem sich mittig verdickenden Doppelkonus versehen. Die Konizität beträgt zwischen 0,1 und 1 Grad zur Mittelachse und ist vom verwendeten Kunststoff sowie dem gewünschten Öffnungsdruck abhängig. Der Stopfen 21 wirkt mit einer Feder 24 des Gehäusebodens 20 zusammen. Die Feder 24 hat eine Dicke von 0,5 bis 0,2 mm. Damit besitzt die den Öffnungsdruck bestimmenden Stopfen- und Bodenteile so geringe Abmessungen, daß ihre besondere Funktion mit bloßem Auge kaum erfaßbar ist.

Die Strömungsrichtung der Gase ist bei Anordnung des Belüftungsgerätes an der Hüfte nicht gegen den Benutzer des Belüftungsgerätes gerichtet.

Der Satopfen 6 ist unabhängig von einem Gasaustritt von Hand zu öffnen. Das ist der Fall, wenn der Batteriepack weitgehend entleert ist und keine ausreichende Energiequelle mehr für das Belüftungsgerät darstellt. Durch Öffnen des Stopfens 6 wird ein Schalter 8 zugänglich. Durch Betätigen des Schalters 8 findet eine Restentladung der Batterien statt. Dazu sind die Batterien gemäß Figur 3 wie folgt eingebunden: Der Schalter 8 schließt einen Stromkreis, in dem sich neben den Batterien 4 noch ein Widerstand 9 und Poly-Switch 10 befinden. Der Widerstand 9 verhindert einen Kurzschluß mit hoher Strombelastung bzw. hoher Wärmebelastung der Batterien 4. Der Schalter 10 ist ein Temperaturschalter, der den Stromkreis bei zu starker Erwärmung während der Restentladung unterbricht bzw. sich nach Abkühlung wieder schließt.

Durch die Restentladung wird sichergestellt, daß der Batteriepack problemlos entsorgt werden kann.

Im übrigen ist vorgesehen, daß das Gehäuse 1 einen eingeschweißten Fuß 7 besitzt. Wahlweise kann auch der Fuß 7 mit dem Gehäuse 1 einstückig sein, dann ist die mit 11 bezeichnete Wand einsetzbar.

Zum Öffnen des Stopfens 6 besitzt die für den Stopfen 6 vorgesehne Öffnung eine Ausnehmung 12. Die Ausnehmung 12 ist so angelegt, daß die Abdichtung zwischen dem Fuß 7 und dem Stopfen 6 nicht gefährdet wird, aber ein Schraubenzieher oder dergleichen Werkzeug unter einen Rand des Stopfens 6 geschoben und der Stopfen 6 herausgehebelt werden kann.

## Ansprüche

1. Batteriepack für Belüftungsgerät, insbesondere für Atemschutzmaske und/oder Schutzanzug,
wobei das Belüftungsgerät den zur Überwindung
des Strömungswiderstandes notwendigen Druck
und/oder einen Überdruck erzeugt un ein Verschluß
vorhanden ist, der sich bei Erreichen eines unzulässigen Batterieinnendruckes öffnet, dadurch gekennzeichnet, daß am Boden (7) des Batteriepacks
ein Stopfen angeordnet ist und/oder eine Schaltung
für die Batterierestentladung vorgesehen ist.

2. Batteriepack nach Anspruch 1, gekennzeichnet durch einen in der Draufsicht kreisförmigen
Stopfen (6).

3. Batteriepack nach Anspruch 1 oder 2, gekennzeichnet durch eine Feder (24) und/oder Doppelkonus (22, 23) als Schließteile am Stopfen (21)
bzw. Gehäuse (20).

4. Batteriepack nach Anspruch 2 oder 3, dadurch gekennzeichnet, daß der Stopfen (6) einen
Rand aufweist und der Boden des Batteriepacks
mit einer Ausnehmung (12) versehen ist.

5. Batteriepack nach einem oder mehreren der
Ansprüche 1 bis 4, dadurch gekennzeichnet, daß
der Schalter (8) für die Restentladung der Batterien
(4) unter dem Stopfen angeordnet ist.

6. Batteriepack nach Anspruch 5, gekennzeichnet durch einen Widerstand (9) und ein Poly-Switch
(10) in Stromkreis für die Restentladung.

7. Batteriepack nach einem oder mehreren der
Ansprüche 1 bis 6, dadurch gekennzeichnet, daß
der Batteriepack zum Anschluß an das Belüftungsgerät mit einem Schnellverschluß versehen ist.

8. Batteriepack nach einem oder mehreren der
Ansprüche 1 bis 7, gekennzeichnet durch ein Gehäuse (1) mit einsetzbarem Fuß (7).

# FIG.1

# FIG.3

FIG.2

FIG.4

## EINSCHLÄGIGE DOKUMENTE

EP 89103986.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | GB - A - 2 034 511 (VARTA) * Fig. 1,4; claim 1 * -- | 1 | H 01 M 2/02 H 01 M 2/12 H 01 M 6/14 A 62 B 9/00 |
| A | GB - A - 1 488 751 (SAFT) * Fig. 1,2; claim 1 * -- | 1,2,3, 4 | |
| A | DE - B2 - 2 716 862 (MABUCHI) * Fig. 1,2; claims 1,4,5,6 * -- | 1,5,6 | |
| D,A | US - A - 4 484 691 (LEES) * Abstract * | 1 | |

---

RECHERCHIERTE SACHGEBIETE (Int. Cl.4)

H 01 M

Der vorliegende Recherchenbericht wurde für alle Patentansprüche erstellt.

| Recherchenort | Abschlußdatum der Recherche | Prüfer |
|---|---|---|
| WIEN | 20-06-1989 | LUX |